# EUROPÄISCHE PATENTANMELDUNG

(11) **EP 4 165 995 A1**
(43) Veröffentlichungstag der Anmeldung: **19.04.2023**
(21) Anmeldenummer: 22198186.3
(22) Anmeldetag: 27.09.2022
(51) Int. Cl.: A22C 7/00, A22C 17/00, B65G 21/12

(54) **PRESSEINRICHTUNG**

(30) Priorität: 12.10.2021 DE 102021126430
(71) Anmelder: Textor Maschinenbau GmbH, 87787 Wolfertschwenden (DE)
(72) Erfinder: Müller, Fabian, Betzigau (DE); Mayer, Josef, Memmingerberg (DE); Hehle, Matthias, Waltenhofen (DE); Seidel, Markus, Egg an der Günz (DE); Böckenfeld, Janik, Kempten (DE)
(74) Vertreter: Manitz Finsterwald Patent- und Rechtsanwaltspartnerschaft mbB

(57) **Zusammenfassung**

Eine Presseinrichtung zum Pressen von Fleischprodukten, insbesondere gefrorenen und/oder angefrorenen Fleischprodukten, bevorzugt Frischfleischprodukten und/oder Bacon, umfasst eine Presskammer, in welche ein zu pressendes Produkt mittels einer Einbringeinrichtung einbringbar ist. Die Einbringeinrichtung umfasst ein Fördermittel, welches dazu ausgebildet ist, das Produkt quer zu einer Längsrichtung der Presskammer zu einem Einbringabschnitt zu fördern, wobei das Fördermittel an einem Gehäuse der Presseinrichtung abgestützt ist, und wobei das Fördermittel relativ zu dem Gehäuse zwischen einer Einbringstellung, in welcher sich der Einbringabschnitt an das Fördermittel anschließt, und einer Inaktivitätsstellung, in welcher sich der Einbringabschnitt nicht an das Fördermittel anschließt, bewegbar ist.

## Beschreibung

Die Erfindung betrifft eine Presseinrichtung zum Pressen von Fleischprodukten, insbesondere gefrorenen und/oder angefrorenen Fleischprodukten, bevorzugt Frischfleischprodukten und/oder Bacon.

Derartige Presseinrichtungen können dazu vorgesehen sein, Fleischprodukte, welche insbesondere als Naturprodukte in unregelmäßiger Form vorliegen können, in eine gewünschte oder erforderliche Form zu komprimieren, um die komprimierten Fleischprodukte verpacken und zum Verkauf anbieten oder weiterverarbeiten zu können. Beispielsweise kann es vorgesehen sein, von den gepressten Fleischprodukten, etwa einen annähernd in Quaderform gepressten Bacon, in einem nachfolgenden Verarbeitungsschritt mittels einer Aufschneidevorrichtung Scheiben abzutrennen, um Portionen aus den Scheiben zu bilden und diese Portionen beispielsweise an eine nachgelagerte Verpackungsmaschine zu übertragen und mittels dieser zu verpacken. Insbesondere bei einer solchen Weiterverarbeitung kann es gewünscht sein, Scheiben einer gewünschten und regelmäßigen Form erzeugen zu können, wozu das vorgelagerte Pressen erforderlich sein kann.

Insbesondere können derartige Presseinrichtungen somit als eine Komponente einer Verarbeitungslinie zum Verarbeiten von Fleischprodukten vorgesehen sein, wobei das Pressen insbesondere einen der ersten Verarbeitungsschritte darstellen kann. In der Regel weisen derartige Presseinrichtungen eine Presskammer auf, welche sich entlang einer Längsrichtung erstreckt und in welche ein zu pressendes Produkt vor dem Pressvorgang einzubringen ist. Dieses Einbringen ist zumeist manuell vorgesehen, so dass ein Benutzer die zu pressenden Fleischprodukte einzeln und nacheinander in die Presskammer einbringen muss. Zudem kann es vorgesehen sein, dass ein Benutzer die Presskammer vor einem Pressvorgang verschließen muss, um beispielsweise einen unbedarften manuellen Eingriff und eine dadurch entstehende Verletzung eines Benutzers während eines Pressvorgangs sicher verhindern zu können. Aufgrund dieser vor jedem Pressvorgang manuell durchzuführenden Schritte kann jedoch häufig nicht der gewünschte Durchsatz erreicht werden.

Grundsätzlich ist es auch möglich, eine automatische Beladung einer solchen Presseinrichtung vorzusehen. Hierbei ergibt sich die Problematik, dass insbesondere bei Presseinrichtungen, die als Teil einer Verarbeitungslinie mit weiteren Verarbeitungseinrichtungen vorgesehen ist, der für die Presseinrichtung zur Verfügung stehende Platz zumeist begrenzt ist. Bei solchen Verarbeitungslinien können sich die weiteren, der Presseinrichtung nachfolgenden Einrichtungen, insbesondere in Längsrichtung, an die Presseinrichtung anschließen, wobei jedoch ein Beladen der Presseinrichtung zumeist quer zu der Längsrichtung vorgesehen ist. Dazu ist es wieder erforderlich, eine Einrichtung zum automatischen Einbringen von Produkten quer zu der Längsrichtung anzuordnen, wobei der zur Verfügung stehende Raum jedoch gerade in dieser Richtung beschränkt sein kann und eine solche Einrichtung insbesondere auch einen Zugriff, beispielsweise zu Wartungs- oder Reinigungsarbeiten, auf die Presseinrichtung und/oder die Presskammer erschweren kann. Daher wird eine manuelle Beladung von Presseinrichtungen trotz des damit verbundenen Aufwandes und der Verringerung des Durchsatzes zumeist einer automatischen Beladung vorgezogen. Gleichwohl könnte eine automatische Beladung der Presseinrichtung bzw. ein automatisches Einbringen von Produkten in eine Presskammer einer Presseinrichtung den Pressvorgang insgesamt erleichtern.

Es ist daher eine Aufgabe der Erfindung, eine Presseinrichtung zum Pressen von Fleischprodukten zu schaffen, welche ein automatisches oder nicht manuelles Einbringen von Produkten in die Presskammer ermöglicht, ohne dass dadurch ein Zugriff zu der Presseinrichtung erschwert oder der Betrieb gestört wird.

Diese Aufgabe wird gelöst durch eine Presseinrichtung mit den Merkmalen des Anspruchs 1. Die Presseinrichtung weist eine sich entlang einer Längsrichtung erstreckende Presskammer auf, in welcher ein zu pressendes Produkt mittels einer Einbringeinrichtung einbringbar ist. Die Einbringeinrichtung umfasst ein erstes Fördermittel, welches dazu ausgebildet ist, das Produkt quer zu der Längsrichtung der Presskammer zu einem Einbringabschnitt zu fördern. Das erste Fördermittel ist ferner an einem Gehäuse der Presseinrichtung abgestützt und relativ zu dem Gehäuse zwischen einer Einbringstellung, in welcher sich der Einbringabschnitt an das erste Fördermittel anschließt, und einer Inaktivitätsstellung, in welcher sich der Einbringabschnitt nicht an das erste Fördermittel anschließt, bewegbar.

Indem bei der hierin offenbarten Presseinrichtung eine Einbringeinrichtung vorgesehen ist, mittels der ein in die Presskammer einzubringendes Produkt quer zu der Längsrichtung der Presskammer zu einem Einbringabschnitt förderbar ist, kann insbesondere ein automatisches Einbringen des Produkts in die Presskammer erfolgen. Der Einbringabschnitt kann beispielsweise in dem Gehäuse der Presseinrichtung angeordnet oder von dem Gehäuse der Presseinrichtung abgestützt sein, so dass die Produkte gewissermaßen mittels des ersten Fördermittels quer zu der Längsrichtung in die Presseinrichtung und/oder ein Gehäuse der Presseinrichtung einbringbar sein können. Der Einbringabschnitt kann jedoch auch in der Presskammer angeordnet sein, so dass die Produkte mittels des ersten Fördermittels der Einbringeinrichtung unmittelbar in die Presskammer einbringbar sein können.

Beispielsweise kann das erste Fördermittel ein endlos umlaufendes Förderband umfassen, auf welches die Produkte von einem Benutzer auflegbar sind, um mittels des ersten Fördermittels zu dem Einbringabschnitt gefördert zu werden. Ein Benutzer muss somit insbesondere nicht in die Presskammer eingreifen, um ein Produkt in die Presskammer einzubringen, sondern kann das Produkt beispielsweise auf dem ersten Fördermittel ablegen, wobei das Produkt mittels der Einbringeinrichtung in die Presskammer eingebracht werden kann. Auch die Sicherheit der Presseinrichtung kann dadurch, dass folglich kein manueller Eingriff in die Presskammer erforderlich ist, erhöht werden. Auch die Ergonomie der Bedienung der Presseinrichtung kann verbessert werden, indem das erste Fördermittel zumindest abschnittsweise beispielsweise tiefer als eine Pressebene, auf welcher die Produkte während des Pressens in der Presskammer aufliegen, angeordnet sein kann, so dass die Höhe, auf welcher ein Benutzer die Produkte heben muss, verringert werden kann. Beispielsweise kann das erste Fördermittel dazu ausgebildet sein, ein aufgelegtes Produkt sowohl quer zu der Längsrichtung, die sich insbesondere entlang der Horizontalen erstrecken kann, und vertikal nach oben zu bewegen. Insbesondere kann das Fördermittel ein schräg nach oben in Richtung des Einbringabschnitts verlaufendes endlos umlaufendes Förderband und/oder einen oder mehrere endlos umlaufende Förderriemen umfassen.

Indem das erste Fördermittel ferner an einem Gehäuse der Presseinrichtung abgestützt ist, kann das erste Fördermittel insbesondere in der Einbringstellung in einer definierten Position an dem Gehäuse gehalten sein, um die Produkte zuverlässig zu dem Einbringabschnitt, welcher insbesondere innerhalb des Gehäuses angeordnet sein kann, fördern zu können. Dabei kann das erste Fördermittel insbesondere quer zu der Längsrichtung der Presskammer von dem Gehäuse abstehen, um die Produkte quer zu der Längsrichtung fördern und einbringen zu können. Durch die Möglichkeit, das an dem Gehäuse abgestützte erste Fördermittel in eine Inaktivitätsstellung zu bewegen, kann flexibel ein Zugriff auf den Einbringabschnitt ermöglicht werden, indem sich das erste Fördermittel in der Inaktivitätsstellung nicht an den Einbringabschnitt anschließt und der Einbringabschnitt somit für einen Zugriff freigegeben ist. Dies kann es beispielsweise ermöglichen, den Einbringabschnitt zu reinigen oder auf den Einbringabschnitt zuzugreifen, um Wartungsarbeiten in diesem Bereich der Presseinrichtung durchzuführen.

Insbesondere kann das erste Fördermittel derart bewegbar sein, dass es in der Inaktivitätsstellung derart angeordnet ist, dass es nicht in derjenigen Richtung von dem Gehäuse absteht, in welcher es in der Einbringstellung absteht. Ein solches Wegbewegen kann es beispielsweise auch ermöglichen, einen Durchgang entlang der Presseinrichtung, welchen das erste Fördermittel in der Inaktivitätsstellung versperren oder jedenfalls einschränken kann, freizugeben, wenn ein Benutzer beispielsweise auf der Seite, an welcher das erste Fördermittel in der Einbringstellung von dem Gehäuse absteht, von einer Vorderseite der Presseinrichtung zu einer Rückseite der Presseinrichtung gelangen möchte.

Das erste Fördermittel ermöglicht es somit, einerseits Produkte automatisch quer zu der Längsrichtung zu dem Einbringabschnitt zu fördern, so dass die Produkte mittels der Einbringeinrichtung in die Presskammer eingebracht werden können. Durch die Möglichkeit, das erste Fördermittel in die Inaktivitätsstellung zu bringen, kann jedoch zugleich flexibel ein Zugang zu dem Einbringabschnitt ermöglicht werden und das erste Fördermittel gewissermaßen aus dem Weg geräumt werden, so dass ein automatisches Einbringen von Produkten bei flexibler Raumnutzung ermöglicht wird. Zudem kann es das erste Fördermittel ermöglichen, mehrere Produkte auf das erste Fördermittel zu laden, welche nacheinander und automatisch zu dem Einbringabschnitt gefördert werden können, so dass das erste Fördermittel auch als ein Puffer für Produkte wirken kann. Dadurch können die Produkte getaktet, also in einer durch die Taktzeit der Presseinrichtung bestimmten Weise, in die Presskammer gelangen, ohne dass Verzögerungen aufgrund eines verlangsamten manuellen Beladens der Presseinrichtung bzw. manuellen Einbringens von Produkten in die Presskammer entstehen.

Weitere Ausführungsformen sind den abhängigen Ansprüchen, der Beschreibung und den Zeichnungen zu entnehmen.

Der Einbringabschnitt kann bei einigen Ausführungsformen bezüglich der Längsrichtung in Flucht zu der Presskammer angeordnet sein. Alternativ dazu kann der Einbringabschnitt bei einigen Ausführungsformen auch in der Presskammer angeordnet sein.

Insbesondere kann das erste Fördermittel dazu ausgebildet sein, das Produkt quer zu der Längsrichtung bis zu einem in Flucht zu der Presskammer angeordneten Einbringabschnitt zu fördern, so dass das Produkt ausgehend von dem Einbringabschnitt beispielsweise in Längsrichtung in die Presskammer eingeschoben werden kann. Dazu kann die Einbringeinrichtung beispielsweise weitere Fördermittel aufweisen, wie nachstehend noch näher erläutert ist. Es kann jedoch auch vorgesehen sein, dass sich der Einbringabschnitt unmittelbar in der Presskammer befindet, so dass das erste Fördermittel auch dazu ausgebildet sein kann, Produkte unmittelbar in die Presskammer zu fördern und damit einzubringen.

Ferner kann das erste Fördermittel insbesondere auch in der Inaktivitätsstellung an dem Gehäuse abgestützt sein. Es kann somit vorgesehen sein, dass das erste Fördermittel nicht von dem Gehäuse gelöst wird, wenn das erste Fördermittel von der Einbringstellung in die Inaktivitätsstellung gebracht wird. Das erste Fördermittel braucht somit nicht von dem Gehäuse gelöst zu werden, um einen Zugang zu dem Einbringabschnitt zu ermöglichen oder den in der Einbringstellung beanspruchten Raum freizugeben, sondern kann an dem Gehäuse gehalten bleiben. Insofern kann auch die Inaktivitätsstellung klar definiert sein und es kann in der Inaktivitätsstellung eine Verbindung zwischen dem ersten Fördermittel und dem Gehäuse bestehen.

Bei einigen Ausführungsformen kann das erste Fördermittel in der Einbringstellung quer zu der Längsrichtung von dem Gehäuse abstehen. Zudem kann das erste Fördermittel in der Inaktivitätsstellung in Längsrichtung hinter dem Gehäuse angeordnet sein. Wie bereits erläutert, kann das Fördermittel durch eine Ausrichtung quer zu der Längsrichtung auf das Fördermittel aufgelegte Produkte quer zu der Längsrichtung zu dem Einbringabschnitt fördern. Insbesondere kann das Fördermittel die Produkte zu dem Einbringabschnitt transportieren, so dass die Produkte beispielsweise mittels des ersten Fördermittels auf den Einbringabschnitt auflegbar sind. Indem das erste Fördermittel jedoch in der Inaktivitätsstellung in Längsrichtung hinter dem Gehäuse angeordnet sein kann, kann an der Seite, an welcher das erste Fördermittel in der Einbringstellung von dem Gehäuse absteht, ein Zugang zu dem Einbringabschnitt gewährt werden. Eine solche Seite kann insbesondere auch als eine Bedienseite bezeichnet werden, von welcher die Produkte zu dem Einbringabschnitt gefördert und gegebenenfalls auch sonstige Einstellungen, beispielsweise mittels einer Steuereinrichtung und/oder eines Touchscreens, vorgenommen werden können. Auch ein Schaltschrank kann von dieser Seite aus zugänglich sein. Eine Steuereinrichtung der Presseinrichtung kann beispielsweise einen Mikroprozessor, einen Mikrochip und/oder eine CPU umfassen.

Während die Anordnung des ersten Fördermittels in der Inaktivitätsstellung in Längsrichtung hinter dem Gehäuse insbesondere einen Zugang zu dem Einbringabschnitt für Wartungsarbeiten oder Reinigungsarbeiten ermöglicht, kann diese flexible Anordnung des ersten Fördermittels auch den Transport der Presseinrichtung erleichtern. Ein solches Bewegen des ersten Fördermittels in die Inaktivitätsstellung ermöglicht eine kompakte Anordnung der Presseinrichtung, welche sich bei in der Inaktivitätsstellung befindlichem ersten Fördermittel vornehmlich entlang der Längserstreckung erstreckt, so dass eine Erstreckung quer zu der Längsrichtung minimiert werden kann. Bei inaktivem ersten Fördermittel besitzt die Presseinrichtung somit keine unnötig übermäßige Breite.

Ferner kann es beispielsweise vorgesehen sein, dass das erste Fördermittel in der Inaktivitätsstellung an dem Gehäuse einrastet, um das erste Fördermittel in der Inaktivitätsstellung zu sichern.

Indem das erste Fördermittel in der Inaktivitätsstellung hinter dem Gehäuse angeordnet sein kann, können insbesondere die Presskammer, der Einbringabschnitt und das erste Fördermittel in der Inaktivitätsstellung in Längsrichtung hintereinander angeordnet sein. In der Einbringstellung können hingegen der Einbringabschnitt und das erste Fördermittel bezüglich der Längsrichtung insbesondere auf einer Höhe angeordnet sein, so dass sich der Einbringabschnitt unmittelbar an das erste Fördermittel anschließen kann.

Das erste Fördermittel kann bei einigen Ausführungsformen zwischen der Einbringstellung und der Inaktivitätsstellung verschwenkbar sein. Insbesondere kann das erste Fördermittel zwischen der Einbringstellung und der Inaktivitätsstellung um eine vertikale Schwenkachse verschwenkbar sein.

Die Schwenkachse, um welche das erste Fördermittel schwenkbar ist, kann insbesondere an dem Gehäuse befestigt und beispielsweise durch vertikal nach oben stehende Stifte oder Bolzen gebildet sein, auf welche das erste Fördermittel aufsteckbar ist. Insbesondere kann das erste Fördermittel - nach Art eines Tür- oder Fensterflügels - am Gehäuse eingehängt werden. Das erste Fördermittel kann eine Stützstrebe, wie z.B. nachstehend näher erläutert, aufweisen und über diese Stützstrebe verschwenkbar an dem Gehäuse angebracht sein. Das erste Fördermittel kann beispielsweise über einen Schwenkarm mit einem solchen Stift oder der Schwenkachse verbunden sein, um insbesondere ein Verschwenken hinter das Gehäuse in die Inaktivitätsstellung zu ermöglichen und einen Abstand zwischen der Schwenkachse und einer Rückseite des Gehäuses zu überbrücken. Die Bewegung des ersten Fördermittels kann, muss aber nicht eine reine Schwenkbewegung sein. Beispielsweise kann das erste Fördermittel an einem starren einteiligen oder an einem mehrteiligen, in sich gelenkig bewegbaren Schwenkarm verschwenkbar angebracht sein, der selbst verschwenkbar am Gehäuse angebracht ist. Alternativ dazu kann das erste Fördermittel beispielsweise zwischen der Einbringstellung und der Inaktivitätsstellung verschiebbar sein, wozu das erste Fördermittel beispielsweise in einer Führung an dem Gehäuse gehalten sein kann. Unabhängig von der Art der Bewegung des ersten Fördermittels zwischen der Einbringstellung und der Inaktivitätsstellung kann es vorgesehen sein, dass das erste Fördermittel in der Einbringstellung und/oder der Inaktivitätsstellung an dem Gehäuse einrastet, so dass sowohl die Einbringstellung als auch die Inaktivitätsstellung bezüglich des Gehäuses definiert und das Fördermittel gegen ein ungewolltes Lösen gesichert sein kann. Beispielsweise kann das erste Fördermittel in der Einbringstellung und in der Inaktivitätsstellung an dem Gehäuse einrasten.

Das erste Fördermittel kann bei einigen Ausführungsformen ein endlos umlaufendes Band umfassen. Ferner kann das erste Fördermittel zwei Umlenkrollen und/oder eine Spanneinrichtung umfassen, um das endlos umlaufende Band umzulenken und gegebenenfalls zu spannen. Das erste Fördermittel kann beispielsweise ein einziges umlaufendes Band umfassen oder mehrere Riemen und/oder Gurte umfassen.

Bei einigen Ausführungsformen kann das erste Fördermittel mehrere Kammern aufweisen, wobei in jede der Kammern zumindest ein Produkt einlegbar sein kann. Insbesondere kann das erste Fördermittel durch die Ausbildung mit mehreren Kammern als ein Speicher und/oder Puffer wirken, so dass mehrere Produkte auf das erste Fördermittel auflegbar sein können und nacheinander zu dem Einbringabschnitt gefördert bzw. transportiert werden können. Insbesondere können dadurch mögliche Verzögerungen aufgrund eines zu langsamen manuellen Beladens der Presskammer verhindert werden. Beispielsweise kann das erste Fördermittel zwei, drei, vier, fünf oder sechs Kammern umfassen. Die Kammern sind vorzugsweise nach oben offen.

Bei einigen Ausführungsformen können die Kammern durch quer zu der Förderrichtung verlaufende Stege voneinander abgegrenzt sein. Insbesondere können sich die Stege senkrecht zu einer Richtung, entlang welcher sich die Produkte während des Förderns zu dem Einbringabschnitt bewegen, erstrecken, um ein Verrutschen der Produkte entgegen dieser Richtung zu verhindern. Insbesondere kann dies vorgesehen sein, wenn die Produkte mittels des ersten Fördermittels sowohl quer zu der Längsrichtung der Presskammer bewegbar als auch - insbesondere durch Bewegen entlang einer Schräge - anhebbar sind, so dass mittels der Stege ein Herabrutschen der Produkte von dem ersten Fördermittel verhindert werden kann. Derartige Stege können somit beispielsweise bei einem ersten Fördermittel vorgesehen sein, welches ein schräg nach oben umlaufendes Band umfasst.

Die Kammern können beispielsweise durch jeweilige durchgehende Stege, welche sich entlang der Längsrichtung durchgehend über das erste Fördermittel erstrecken, gebildet sein. Alternativ dazu kann jeder Steg auch mehrere getrennte Stegabschnitte umfassen, so dass die Stege gewissermaßen stellenweise unterbrochen sein können. Insbesondere bei einer Ausbildung des ersten Fördermittels mit einem endlos umlaufenden Band können die Stege ferner an einer vorderen Umlenkung des Bandes abtauchen, um eine Strecke zwischen der Umlenkung und dem Einbringabschnitt zu überbrücken und die Produkte während einer Bewegung auf den Einbringabschnitt abzustützen.

Das erste Fördermittel kann bei einigen Ausführungsformen in der Einbringstellung an dem Gehäuse über eine Stützstrebe abgestützt sein. Insbesondere kann das erste Fördermittel in der Einbringstellung ausschließlich über das Gehäuse am Boden abgestützt sein.

Es kann somit vorgesehen sein, dass das Fördermittel keine eigene Abstützung am Boden aufweist, sondern ausschließlich über das Gehäuse abgestützt ist. Auch dies kann eine kompakte Ausbildung der Presseinrichtung ermöglichen und zudem die Bewegung des ersten Fördermittels aus der Einbringstellung in die Inaktivitätsstellung erleichtern, indem dazu keine Abstützung am Boden entlanggeschoben werden muss. Die Abstützung des ersten Fördermittels über seine Stützstrebe kann es insbesondere ermöglichen, durch die auf das erste Fördermittel geladenen Produkte ausgeübte Drehmomente auf das Gehäuse zu übertragen. Eine solche Stützstrebe kann sich insbesondere schräg nach unten von einem zu dem Gehäuse beabstandeten Endabschnitt des ersten Fördermittels zu dem Gehäuse erstrecken.

Das erste Fördermittel kann bei einigen Ausführungsformen an einem dem Einbringabschnitt zugewandten Übergabeabschnitt einen Sensor zum Erfassen des Produkts aufweisen. Insbesondere kann der Sensor dazu ausgebildet sein, ein hinteres Ende des Produkts zu erfassen und dadurch zu detektieren, wenn das Produkt an den Einbringabschnitt übergeben ist. Ein Signal des Sensors kann beispielsweise an eine Steuereinrichtung der Presseinrichtung übermittelt werden, wobei diese Steuereinrichtung dazu ausgebildet sein kann, eine Bewegung des ersten Fördermittels zu stoppen, wenn der Sensor ein solches Signal aussendet und die Übergabe eines Produkts an den Einbringabschnitt signalisiert. Dadurch kann sichergestellt werden, dass lediglich ein einziges Produkt in dem Einbringabschnitt angeordnet ist. Hingegen kann das erste Fördermittel wiederum angetrieben werden, wenn der Pressvorgang beendet und/oder das Produkt von dem Einbringabschnitt in die Presskammer gefördert wurde.

Das erste Fördermittel kann bei einigen Ausführungsformen in der Einbringstellung verriegelbar sein. Alternativ oder zusätzlich kann das erste Fördermittel bei einigen Ausführungsformen eine Erfassungseinrichtung aufweisen, welche dazu ausgebildet ist, die Einbringstellung zu erfassen. Durch eine solche Verriegelung kann insbesondere sichergestellt werden, dass das Fördermittel sicher in der Einbringstellung gehalten und nicht ungewollt aus der Einbringstellung bewegt wird. Die Ausbildung der Presseinrichtung mit einer Erfassungseinrichtung kann ferner dazu dienen, die korrekte Anordnung des ersten Fördermittels in der Einbringstellung zu erfassen und einen Antrieb des ersten Fördermittels beispielsweise ausschließlich dann zu ermöglichen, wenn sich das erste Fördermittel in der Einbringstellung befindet. Fehlerhafte Übergaben von Produkten von dem ersten Fördermittel können dadurch vermieden werden.

Bei einigen Ausführungsformen kann in dem Gehäuse ein Antrieb zum Antreiben des ersten Fördermittels angeordnet sein und das erste Fördermittel kann dazu ausgebildet sein, infolge einer Bewegung von der Inaktivitätsstellung in die Einbringstellung an eine an dem Gehäuse abgestützte und von dem Antrieb angetriebene Abtriebswelle anzukoppeln.

Es kann somit vorgesehen sein, dass ein Antrieb für das erste Fördermittel unmittelbar an dem Gehäuse abgestützt ist, so dass an dem ersten Fördermittel kein eigener Antrieb angeordnet werden muss. Der Antrieb kann dazu ausgebildet sein, die gleichsam an dem Gehäuse abgestützte Abtriebswelle anzutreiben und insbesondere in Rotation zu versetzen, wobei es sich bei der Abtriebswelle beispielsweise um eine Motorwelle des Antriebs oder um eine mit einer Motorwelle des Antriebs verbundene Welle handeln kann. Indem das erste Fördermittel dazu ausgebildet ist, infolge einer Bewegung in die Einbringstellung an die Abtriebswelle anzukuppeln, kann das erste Fördermittel unmittelbar von dem in dem Gehäuse angeordneten Antrieb angetrieben werden, ohne dass beispielsweise außerhalb des Gehäuses verlaufende Mittel wie z.B. elektrische Leitungen, Riemen etc. zum Antreiben des ersten Fördermittels erforderlich sind. Zudem muss das erste Fördermittel nicht eigens mit Strom versorgt werden. Auch dadurch kann eine kompakte und übersichtliche Ausbildung der Presseinrichtung erreicht werden, indem auf solche externen Antriebsmittel und/oder Stromverbindungen verzichtet werden kann. Vielmehr kann das erste Fördermittel flexibel und wahlweise lediglich durch Bewegen in die Einbringstellung rein mechanisch an den Antrieb angekuppelt bzw. mit dem Antrieb verbunden werden, um ein automatisches Einbringen von Produkten in die Presseinrichtung zu ermöglichen.

Das erste Fördermittel kann bei einigen Ausführungsformen ein Antriebsteil aufweisen, welches dazu ausgebildet sein kann, infolge der Bewegung des ersten Fördermittels von der Inaktivitätsstellung in die Einbringstellung in eine drehfeste Verbindung mit der Abtriebswelle zu gelangen. Das ohnehin erforderliche Bewegen in die Einbringstellung kann also dazu genutzt werden, gleichzeitige eine antriebswirksame Verbindung herzustellen. Insbesondere kann die Antriebswelle des Fördermittels mit einer Umlenkrolle eines endlos umlaufenden Förderbandes verbunden sein und/oder durch eine solche Umlenkrolle gebildet sein. Indem die Antriebswelle automatisch infolge einer Bewegung des ersten Fördermittels von der Inaktivitätsstellung in die Einbringstellung in drehfeste Verbindung mit der Abtriebswelle gelangen kann, kann die Antriebswelle unmittelbar mittels des Antriebs angetrieben werden, ohne dass weitere Schritte zur Verbindung erforderlich sind. Auch auf einen extern bezüglich des Gehäuses angeordneten Antrieb zum Antreiben des ersten Fördermittels oder etwaige Kabelverbindungen für eine elektrische Stromversorgung oder für ein signaltechnische Ansteuerung kann verzichtet werden.

Die Antriebswelle und die Abtriebswelle können bei einigen Ausführungsformen in die Einbringstellung des ersten Fördermittels koaxial zueinander angeordnet sein. Insbesondere können die Antriebswelle und die Abtriebswelle in der Einbringstellung des ersten Fördermittels unmittelbar miteinander verbunden sein, so dass eine Drehung der Abtriebswelle direkt auf die Antriebswelle übertragen werden kann. Bei solchen Ausführungsformen sind daher keine weiteren - abgesehen von gegebenenfalls erforderlichen Kuppelelementen - Komponenten zwischen der Antriebswelle und der Abtriebswelle angeordnet, insbesondere kein Getriebe.

Bei einigen Ausführungsformen kann an der Antriebswelle ein erstes Kuppelelement angeordnet und an der Abtriebswelle ein zweites Kuppelelement angeordnet sein, wobei das erste Kuppelelement dazu ausgebildet sein kann, infolge der Bewegung des ersten Fördermittels von der Inaktivitätsstellung in die Einbringstellung in Eingriff zu dem zweiten Koppelelement zu gelangen. Insbesondere kann durch diesen Eingriff erreicht werden, dass die Antriebswelle drehfest mit der Abtriebswelle gekoppelt wird. Durch das erste Koppelelement und das zweite Koppelelement können die Antriebswelle und die Abtriebswelle ferner insbesondere in der Einbringstellung des ersten Fördermittels unmittelbar miteinander verbunden sein und in direktem Eingriff zueinander stehen, so dass eine Drehung der Abtriebswelle direkt und mit minimalen Verlusten auf die Antriebswelle des ersten Fördermittels übertragen werden kann.

Das erste Kuppelelement kann bei einigen Ausführungsformen zumindest zwei axiale Kuppelsätze aufweisen, welche in der Einbringstellung in zugeordnete axiale Kuppelvertiefungen des zweiten Kuppelelements eingreifen. Alternativ dazu kann auch vorgesehen sein, dass das erste Kuppelelement zumindest zwei axiale Kuppelvertiefungen aufweist, in welche in der Einbringstellung zwei axiale Kuppelfortsätze des zweiten Kuppelelements eingreifen. Das erste Kuppelelement und das zweite Kuppelelement können somit in der Einbringstellung des ersten Fördermittels eine Steckverbindung eingehen, so dass eine Rotation der Abtriebswelle über die Kuppelelemente auf die Antriebswelle übertragen werden kann. Die Ausbildung der Kuppelelemente mit zumindest zwei axialen Kuppelfortsätzen und zwei axialen Kuppelvertiefungen kann eine zuverlässige Übertragung der Drehung der Abtriebswelle auf die Antriebswelle ermöglichen. Die axiale Richtung der Kuppelfortsätze und der Kuppelvertiefungen kann sich insbesondere auf die Ausrichtung der Antriebswelle und der Abtriebswelle in der Einbringstellung des ersten Fördermittels beziehen.

Das zweite Kuppelelement kann bei einigen Ausführungsformen auslenkbar an der Abtriebswelle angeordnet sein. Insbesondere kann das zweite Kuppelelement radial und/oder schwenkbar, insbesondere um zumindest eine senkrecht zu der Abtriebswelle ausgerichtete Schwenkachse schwenkbar, an der Abtriebswelle auslenkbar angeordnet sein. Eine solche auslenkbare Anordnung des zweiten Kuppelelements kann insbesondere eine Ausrichtung und/oder eine Korrektur ermöglichen, wenn das erste Fördermittel aus der Inaktivitätsstellung in die Einbringstellung bewegt wird, um einen sicheren Eingriff des ersten Kuppelelements und des zweiten Kuppelelements zu ermöglichen. Insbesondere kann durch eine solche auslenkbare Anordnung ein Toleranzausgleich erreicht werden.

Um das zweite Kuppelelement auslenkbar an der Abtriebswelle anzuordnen, kann das zweiten Kuppelelement beispielsweise elastisch und/oder rückfedernd ausgebildet sein. Ferner kann das zweite Kuppelelement über eine Feder an der Abtriebswelle gehalten sein. Darüber hinaus kann das erste Kuppelelement bei einigen Ausführungsformen axial auslenkbar an der Antriebswelle gehalten sein. Beispielsweise kann das erste Kuppelelement an der Antriebswelle federvorgespannt gehalten sein. Auch dies kann einen Toleranzausgleich während des Bewegens des ersten Fördermittels in die Einbringstellung ermöglichen, um eine zuverlässige drehfeste Verbindung über die Kuppelelemente erreichen zu können.

Bei einigen Ausführungsformen kann das zweite Kuppelelement kardanisch an der Abtriebswelle gehalten sein. Auch eine solche kardanische Verbindung des zweiten Kuppelelements mit der Abtriebswelle kann ein Auslenken des zweiten Kuppelelements ermöglichen, wenn das erste Fördermittel in die Einbringstellung überführt und das zweite Kuppelelement von dem ersten Kuppelelement mechanisch beaufschlagt wird. Wiederum kann dadurch insbesondere ein Toleranzausgleich erreicht werden.

Bei einigen Ausführungsformen kann in dem Einbringabschnitt ein zweites Fördermittel angeordnet sein, welches dazu ausgebildet ist, das Produkt in dem Einbringabschnitt quer zu der Längsrichtung zu fördern.

Bei einigen Ausführungsformen kann das zweite Fördermittel zudem mittels des Antriebs antreibbar sein. Es kann somit vorgesehen sein, dass zum Antreiben sowohl des ersten, zwischen der Einbringstellung und der Inaktivitätsstellung bewegbaren, als auch zum Antreiben des zweiten Fördermittels ein einziger und somit ein gemeinsamer Antrieb vorgesehen ist. Der Antrieb kann somit dazu ausgebildet sein, sowohl das erste Fördermittel als auch das zweite Fördermittel anzutreiben. Das zweite Fördermittel kann insbesondere innerhalb des Gehäuses angeordnet sein. Indem der Antrieb zum Antreiben sowohl des ersten als auch des zweiten Fördermittels genutzt werden kann, kann wiederum eine kompakte Ausbildung der Presseinrichtung erreicht werden, ohne dass ein gesonderter Antrieb für das erste Fördermittel erforderlich ist.

Das zweite Fördermittel kann bei einigen Ausführungsformen durch eine von dem Antrieb angetriebene zweite Abtriebswelle antreibbar sein. Die zweite Abtriebswelle kann insbesondere parallel zu der bereits genannten Abtriebswelle, über welche das erste Fördermittel antreibbar ist, ausgerichtet sein.

Ferner kann das zweite Fördermittel dazu ausgebildet sein, das Produkt von dem ersten Fördermittel wegzubewegen.

Der Antrieb kann bei einigen Ausführungsformen dazu ausgebildet sein, die Abtriebswelle und die zweite Abtriebswelle in einander entgegengesetzte Drehungen in Rotation zu versetzen. Eine Drehrichtung, in welche die Abtriebswelle mittels des Antriebs drehbar ist, kann somit einer Drehrichtung entgegengesetzt sein, in welcher die zweite Abtriebswelle mittels des Antriebs antreibbar ist. Der Antrieb kann ferner umschaltbar ausgebildet sein, so dass sowohl die Abtriebswelle als auch die zweite Abtriebswelle in verschiedene Drehrichtungen antreibbar sein können. Jedoch können die Abtriebswelle und die zweite Abtriebswelle stets in einander entgegengesetzte Drehungen versetzbar sein.

Das erste Fördermittel kann bei einigen Ausführungsformen in der Einbringstellung durch eine Drehung einer Motorwelle in einer ersten Drehrichtung antreibbar sein und gegenüber einer Drehung der Motorwelle in einer der ersten Drehrichtung entgegengesetzten zweiten Drehrichtung einen Freilauf aufweisen. Das zweite Fördermittel kann ferner durch eine Drehung der Motorwelle in der zweiten Drehrichtung antreibbar sein und gegenüber einer Drehung der Motorwelle in der ersten Drehrichtung einen Freilauf aufweisen.

Das erste Fördermittel und das zweite Fördermittel können somit bei einigen Ausführungsformen durch entgegengesetzte Drehungen des Antriebs antreibbar sein. Durch die Ausbildung des ersten Fördermittels und des zweiten Fördermittels mit einem jeweiligen Freilauf kann somit erreicht werden, dass bei einer Drehung der Motorwelle in der ersten Drehrichtung lediglich das erste Fördermittel angetrieben wird, wohingegen das zweite Fördermittel nicht angetrieben wird. Bei einer Drehung der Motorwelle in der zweiten Drehrichtung wird hingegen das zweite Fördermittel angetrieben, während das erste Fördermittel aufgrund des Freilaufs keinen Antrieb erfährt. Dies ermöglicht es beispielsweise, ein Produkt mittels des ersten Fördermittels zu dem Einbringabschnitt zu fördern, wobei das in dem Einbringabschnitt angeordnete zweite Fördermittel ruht, bis das Fördern des Produkts zu dem Einbringabschnitt mittels des ersten Fördermittels abgeschlossen ist. Dies kann, wie bereits erläutert, beispielsweise mittels eines an dem ersten Fördermittel angeordneten Sensors erfasst werden. Sobald das Produkt in dem Einbringabschnitt angeordnet ist, kann der Antrieb hingegen umgeschaltet werden, so dass das Produkt nunmehr in dem Einbringabschnitt mittels des zweiten Fördermittels bewegt werden kann, wohingegen das erste Fördermittel ruht. Dadurch kann verhindert werden, dass das erste Fördermittel ein weiteres Produkt in den Einbringabschnitt fördert, wenn bereits ein Produkt in dem Einbringabschnitt angeordnet ist und mittels des zweiten Fördermittels weiterbewegt wird.

Der Antrieb kann bei einigen Ausführungsformen einen Elektromotor, insbesondere einen Servomotor umfassen. Insbesondere eine Ausbildung des Antriebs mit einem Servomotor kann eine präzise Prozesssteuerung und ein schnelles Umschalten ermöglichen, um beispielsweise das vorstehend erläuterte aufeinanderfolgende Antreiben des ersten Fördermittels und des zweiten Fördermittels durch den gemeinsamen Antrieb zu ermöglichen.

Der Antrieb kann bei einigen Ausführungsformen dazu ausgebildet sein, die Abtriebswelle und die zweite Abtriebswelle über einen Riemen anzutreiben.

Der Riemen kann bei einigen Ausführungsformen ferner über eine Umlenkrolle überführt sein. Insbesondere können die Abtriebswelle, die zweite Abtriebswelle, die Umlenkrolle und die bereits genannte Motorwelle bei einigen Ausführungsformen über den Riemen miteinander verbunden sein. Eine derartige Verbindung der Abtriebswelle und der zweiten Abtriebswelle über einen Riemen kann zudem das vorstehend erläuterte Antreiben der Abtriebswelle und der zweiten Abtriebswelle in entgegengesetzte Drehrichtungen auf einfache Weise ermöglichen, um beispielsweise das vorstehend erläuterte Fördern eines Produkts mittels des ersten Fördermittels in den Einbringabschnitt bei ruhendem zweiten Fördermittel und darauffolgendes Fördern des Produkts mittels des zweiten Fördermittels bei ruhendem ersten Fördermittel ermöglichen. Der Riemen kann beispielsweise als ein Band und/oder ein Gurt ausgebildet sein.

Das zweite Fördermittel kann bei einigen Ausführungsformen dazu ausgebildet sein, das Produkt in dem Einbringabschnitt gegen einen Anschlag zu fördern. Insbesondere kann dadurch erreicht werden, dass das Produkt in einer vorgegebenen Lage in dem Einbringabschnitt positionierbar ist, um beispielsweise ein darauffolgendes korrektes Einbringen in die Presskammer zu ermöglichen. Der Anschlag kann beispielsweise von einem Blech gebildet sein, gegen welches das Produkt mittels des zweiten Fördermittels schiebbar ist. Darüber hinaus kann der Anschlag insbesondere dem ersten Fördermittel quer zu der Längsrichtung entgegengesetzt angeordnet sein.

Die Einbringeinrichtung kann bei einigen Ausführungsformen ein drittes Fördermittel aufweisen, welches dazu ausgebildet sein kann, das Produkt aus dem Einbringabschnitt entlang der Längsrichtung in die Presskammer zu fördern. Insbesondere kann der Einbringabschnitt dazu bezüglich der Längsrichtung in Flucht zu der Presskammer ausgerichtet sein, so dass das Produkt durch eine lineare Bewegung entlang der Längsrichtung aus dem Einbringabschnitt in die Presskammer förderbar sein kann. Ferner kann das Produkt dazu mittels der Einbringeinrichtung, insbesondere dem vorstehend genannten zweiten Fördermittel, in dem Einbringabschnitt gegen einen Anschlag förderbar sein, so dass das Produkt in dem Einbringabschnitt bezüglich der Längsrichtung in Flucht zu der Presskammer angeordnet werden kann.

Das Einbringen des Produkts in die Presskammer mittels der Einbringeinrichtung kann somit zunächst ein Fördern des Produkts quer zu der Längsrichtung mittels des ersten Fördermittels zu dem Einbringabschnitt umfassen, wobei das Produkt daraufhin mittels des dritten Fördermittels entlang der Längsrichtung in die Presskammer förderbar sein kann. Gegebenenfalls kann zudem vorgesehen sein, dass das Produkt nach dem Fördern in den Einbringabschnitt mittels eines in dem Einbringabschnitt angeordneten zweiten Fördermittels quer zu der Längsrichtung gefördert wird. Insbesondere kann das Produkt mittels des zweiten Fördermittels quer zu der Längsrichtung gegen einen Anschlag gefördert werden. So kann durch das zweite Fördermittel eine jeweils gewünschte Ausrichtung des Produktes quer zu der Längsrichtung sichergestellt werden, so dass das dritte Fördermittel auf ein jeweils korrekt ausgerichtetes Produkt einwirken kann.

Bei einigen Ausführungsformen kann das dritte Fördermittel als ein Produktschieber ausgebildet sein. Beispielsweise kann ein solcher Produktschieber an einem der Presskammer abgewandten Ende des Produkts angreifen, um das Produkt in die Presskammer zu schieben. Dazu kann der Produktschieber beispielsweise eine Schiebefläche aufweisen. Es ist jedoch auch möglich, dass der Produktschieber einen Greifer aufweist, um in das Produktende einzugreifen. Der Produktschieber kann beispielsweise in einer sich entlang der Längsrichtung erstreckenden Führung geführt sein und mittels eines Antriebs antreibbar sein. Zudem kann der Produktschieber zwischen zwei Endstellungen bewegbar sein, um ein Produkt aus dem Einbringabschnitt in die Presskammer fördern zu können, daraufhin jedoch wieder zurückverfahren werden zu können, um ein darauffolgend in den Einbringabschnitt gefördertes Produkt wiederum in die Presskammer einbringen zu können. Der Produktschieber kann beispielsweise mittels eines Spindeltriebs antreibbar sein und/oder es kann ein Elektromotor zum Antreiben des Produktschiebers vorgesehen sein.

Bei einigen Ausführungsformen kann die Presskammer ein in Längsrichtung verfahrbares Pressmittel aufweisen, welches zum Komprimieren des Produkts in der Presskammer in Richtung eines Gegenelements verfahrbar ist, wobei das dritte Fördermittel dazu ausgebildet sein kann, das Produkt über das Pressmittel hinweg in die Presskammer zu fördern.

Ferner kann die Presskammer bei einigen Ausführungsformen ein erstes Pressmittel, welches entlang der Längsrichtung in Richtung eines ersten Gegenelements verfahrbar ist, ein zweites Pressmittel, welches horizontal und quer zu der Längsrichtung in Richtung eines zweiten Gegenelements verfahrbar ist, und ein drittes Pressmittel umfassen, welches entlang der vertikalen Richtung eines dritten Gegenelements verfahrbar ist. Das dritte Gegenelement kann insbesondere von einer Pressebene gebildet werden, auf welcher das Produkt in der Presskammer aufliegt. Bei solchen Ausführungsformen kann das Produkt somit insbesondere entlang der drei Raumrichtungen gepresst werden, um beispielsweise einen Bacon in eine quaderförmige Form pressen zu können. Die Längsrichtung kann insbesondere durch eine Richtung definiert sein, in welcher die Presskammer die größte Erstreckung aufweist. Ferner kann die Längsrichtung in der Horizontalen verlaufen.

Was mögliche Dimensionierungen der Presseinrichtung betrifft, insbesondere gemäß der vorstehend erläuterten möglichen Ausführungsformen und/oder gemäß des nachstehend anhand der Figuren näher beschriebenen Ausführungsbeispiels, so kann die Presseinrichtung eine oder mehrere der folgenden Merkmale aufweisen, wobei diese Merkmale, sofern nichts anderes erwähnt ist, insbesondere bei solche Ausführungsformen einer Presseinrichtung verwirklicht sein können, die zum Pressen von Bacon dienen:
Die Presseinrichtung kann für maximale Produktabmessungen mit einer sich senkrecht zur Längsrichtung erstreckenden Produktbreite von etwa 350mm, einer parallel zur Längsrichtung verlaufenden Produktlänge von etwa 800mm und einer Produkthöhe von etwa 150mm ausgeführt sein.

Was die äußeren Abmessungen der Presseinrichtung betrifft, so kann diese eine Breite von etwa 100cm und eine Länge von etwa 270cm aufweisen. Eine Breite von etwa 100cm, was vergleichsweise schmal ist, kann insbesondere durch die hierin offenbarte Art und Weise des Antriebs für das in Richtung der Breite verfahrbare Pressmittel erreicht werden und kann auch in anderer, insbesondere ästhetischer Hinsicht von Vorteil sein, nämlich insbesondere dann, wenn andere Komponenten einer Verarbeitungslinie zumindest ungefähr die gleiche Breite aufweisen. Bekannte Bacon-Slicer beispielsweise besitzen ebenfalls eine Breite von etwa 100cm, so dass sich die hierin offenbarte Presseinrichtung in eine entsprechende Verarbeitungslinie optimal einpassen kann. Die Presseinrichtung kann auch mit einer Breite von bis zu etwa 130cm bis 140cm realisiert werden, um breitere Produkte komprimieren zu können, wie es etwa für das Komprimieren von Bacon auf dem US-Markt erforderlich sein kann. Eine Länge von 270cm ist im Vergleich zu bekannten Presseinrichtungen mit ähnlichen Leistungen und für ähnliche Anwendungen relativ gering, womit Platz in Längsrichtung eingespart werden kann. Die Beladehöhe, also diejenige Höhe, in welche ein Benutzer ein zu komprimierendes Produkt mindestens anheben muss, um es in die Presskammer der Presseinrichtung einzubringen, kann im Bereich von etwa 100cm bis 120cm über dem Boden liegen, insbesondere je nach Einstellung von in der Höhe verstellbaren Standfüßen, mit denen die Presseinrichtung auf dem Boden steht. Auch diese relativ niedrige, ergonomisch günstige und für den Benutzer somit entlastende Beladehöhe kann durch die hierin offenbarte Art und Weise des Antriebs für das in Richtung der Breite verfahrbare Pressmittel erreicht werden. Diese Beladehöhe kann durch die Oberseite einer insbesondere verschwenkbaren und/oder entnehmbaren Schutzabdeckung für das in Richtung der Breite verfahrbare Pressmittel definiert sein, wenn das Beladen über diese Schutzabdeckung hinweg erfolgt.

Die Pressmittel für das Komprimieren der Produkte in den unterschiedlichen Richtungen können so ausgelegt sein, dass sie dauerhaft maximalen Belastungen widerstehen können wie folgt: Komprimieren in vertikaler Richtung: etwa 25 Tonnen, entspricht also etwa einer Kraft von 250kN; Komprimieren in Längsrichtung: etwa 4 Tonnen, entspricht also etwas einer Kraft von 40kN; Komprimieren in Breitenrichtung, also senkrecht zur Längsrichtung: etwa 8 Tonnen, entspricht also etwa einer Kraft von 80kN.

Die Erfindung wird im Folgenden rein beispielhaft anhand eines Ausführungsbeispiels unter Bezugnahme auf die Zeichnungen erläutert.

Es zeigen:
- Fig. 1 A bis 1C: perspektivische Ansichten einer Presseinrichtung sowie eine Draufsicht auf die Presseinrichtung,
- Fig. 2A und 2B: eine perspektivische Ansicht sowie eine perspektivische Detailansicht eines ersten Fördermittels einer Einbringeinrichtung der Presseinrichtung zum Einbringen von zu pressenden Produkten in eine Presskammer,
- Fig. 2C: eine Längsschnittdarstellung eines vorderen Abschnitts des ersten Fördermittels,
- Fig. 3A und 3B: eine perspektivische Vorderansicht und eine perspektivische Rückansicht eines Antriebs zum Antreiben des ersten Fördermittels und
- Fig. 4: eine Detailansicht eines mit einer von dem Antrieb antreibbaren Abtriebswelle verbundenen Kuppelelements, über welches das erste Fördermittel mit dem Antrieb verbindbar ist.

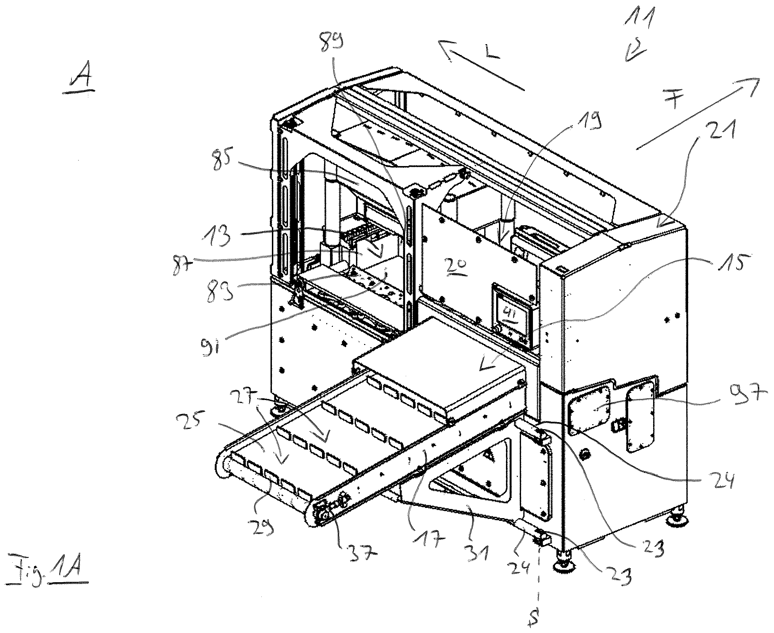

Fig. 1A zeigt eine Presseinrichtung 11, welche dazu vorgesehen ist, Fleischprodukte und insbesondere gefrorene und/oder angefrorene Fleischprodukte zu komprimieren. Beispielsweise kann die Presseinrichtung 11 zum Pressen von Frischfleischprodukten und/oder Bacon vorgesehen sein.

Die Presseinrichtung 11 weist eine Presskammer 13 auf, welche sich entlang einer Längsrichtung L erstreckt und in welche ein nicht gezeigtes Produkt zum Pressen einbringbar ist. Um das Produkt in der Presskammer 13 komprimieren zu können, umfasst die Presskammer ein erstes Pressmittel 81, welches entlang der Längsrichtung L auf ein erstes Gegenelement 87 zu verfahrbar ist, um das Produkt in Längsrichtung L komprimieren zu können. Die Längsrichtung L ist dabei insbesondere durch diejenige Richtung definiert, entlang welcher die Presskammer 13 die größte Erstreckung aufweist. Ferner kann die Längsrichtung L in der Horizontalen ausgerichtet sein.

Die Presskammer 13 umfasst darüber hinaus ein zweites verfahrbares Pressmittel 83, welches quer zu der Längsrichtung L und in der Horizontalen in Richtung eines zweiten Gegenelements 89 verfahrbar ist. Durch das zweite Pressmittel 83 kann folglich ein Produkt quer zur Längsrichtung 11 komprimiert werden. Darüber hinaus umfasst die Presskammer 13 ein drittes verfahrbares Pressmittel 85, welches vertikal nach unten in Richtung eines dritten Gegenelements 91 verfahrbar ist, um ein Produkt auch in vertikaler Richtung komprimieren zu können. Das dritte Gegenelement 91 bildet insbesondere eine Pressebene, auf welcher ein Produkt während des Pressens in der Presskammer 13 aufliegt. Ferner weist die Presskammer 13 einen Ausgang 92 auf, durch welchen ein fertig gepresstes Produkt in Längsrichtung L aus der Presskammer 13 herausbewegbar ist.

Eine derartige Presseinrichtung 11 kann somit dazu vorgesehen sein, Fleischprodukte in eine vorgegebene und/oder gewünschte Form zu komprimieren, um die komprimierten Fleischprodukte beispielsweise zu verpacken und zum Verkauf anzubieten. Beispielsweise können annähernd quaderförmig gepresste Baconstücke von der Presseinrichtung ausgegeben werden, die dann in dieser Form zum Verkauf angeboten werden können. Es kann jedoch vorzugsweise vorgesehen sein, dass die Presseinrichtung 11 als Teil einer Verarbeitungslinie vorgesehen ist, so dass der Presseinrichtung 11 weitere Vorrichtungen zum Verarbeiten von Fleischprodukten nachgelagert sein können. Beispielsweise kann es vorgesehen sein, die von der Presseinrichtung 11 gepressten Produkte mittels einer Aufschneidevorrichtung in Scheiben zu schneiden aus diesen Scheiben Portionen zu bilden, die dann an eine Verpackungsmaschine übergeben und portionsweise verpackt werden können. Auch bei einer solchen Verarbeitung kann es vorgesehen sein, gleichförmige Scheiben von dem Produkt abtrennen zu können, wobei die Scheibenform insbesondere durch einen kontrollierten Pressvorgang bestimmt werden kann.

Insbesondere, wenn die Presseinrichtung 11 als Teil einer Verarbeitungslinie vorgesehen ist, kann die zum Verarbeiten der Produkte erforderliche Dauer insbesondere von Zykluszeiten der Presseinrichtung 11 abhängen. Um Produkte mittels der Presseinrichtung 11 pressen zu können, müssen diese jedoch zunächst in die Presskammer 13 eingebracht werden, was zumeist manuell erfolgt. Dies kann den Prozess jedoch verlangsamen und darüber hinaus können bei einem gegebenenfalls nicht ordnungsgemäß gestoppten Pressvorgang Gefahren für einen in die Presskammer 13 eingreifenden Benutzer bestehen.

Um einen sicheren und schnellen Betrieb der Presseinrichtung 11 zu ermöglichen, weist die in den Fig. 1A bis 1C veranschaulichte Presseinrichtung 11 hingegen eine Einbringeinrichtung 15 auf, welche dazu ausgebildet ist, Produkte in die Presskammer 13 einzubringen. Die Produkte müssen somit nicht manuell in die Presskammer eingebracht werden, sondern können automatisch mittels der Einbringeinrichtung 15 in die Presskammer 13 bewegt werden.

Um ein Einbringen der Produkte zu ermöglichen, weist die Einbringeinrichtung 15 ein erstes Fördermittel 17 auf, welches dazu ausgebildet ist, die Produkte quer zu der Längsrichtung L der Presskammer 13 zu einem Einbringabschnitt 19 zu fördern. Das erste Fördermittel 17 umfasst dabei ein Förderband 25 und ragt quer zu der Längsrichtung L von einem Gehäuse 21 der Presseinrichtung 11 weg.

Die Ausbildung der Einbringeinrichtung 15 mit einem solchen von dem Gehäuse 21 wegragenden ersten Fördermittel 17 ermöglicht es einem Benutzer zunächst, die Produkte nicht direkt in die Presskammer 13 einbringen zu müssen, sondern auf das Förderband 25 auflegen zu können. Das erste Fördermittel 17 weist mehrere nach oben offene, jeweils nach Art eines Faches ausgebildete Kammern 27 auf, welche durch Stege 29 voneinander getrennt sind, wobei in jede der Kammern 27 zumindest ein Produkt eingelegt werden kann. Dies kann insbesondere ein kontrolliertes Fördern der Produkte ermöglichen und ein Herabrutschen der Produkte verhindern, wenn die Produkte entlang einer Förderrichtung F gefördert werden, welche schräg nach oben verläuft.

Ferner ist das erste Fördermittel 17 über eine Stützstrebe 31 an dem Gehäuse 21 abgestützt, weist jedoch keine eigene Abstützung am Boden auf. Durch die Stützstrebe 31 können insbesondere Drehmomente, welche durch auf das Förderband 25 aufgeladene Produkte auf das erste Fördermittel 17 übertragen werden, in das Gehäuse 21 abgeleitet werden. Indem das erste Fördermittel 17 nicht selbst am Boden abgestützt ist, kann eine kompakte Ausbildung der Presseinrichtung 11 erreicht werden.

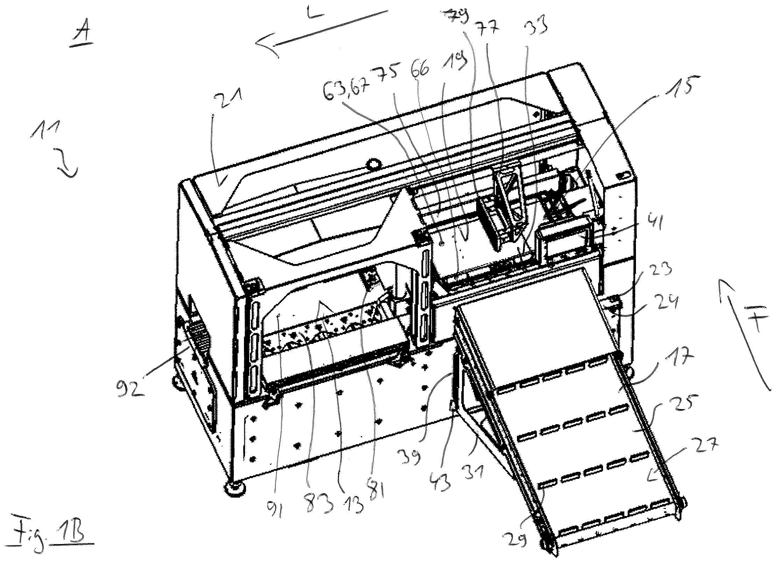

Wie bereits erläutert, ist das erste Fördermittel 17 dazu ausgebildet, Produkte zu einem Einbringabschnitt 19 zu fördern. Wie aus Fig. 1B hervorgeht, bei welcher die Presseinrichtung 11 ohne einen Gehäuseabschnitt 20 gezeigt ist, ist dieser Einbringabschnitt 19 innerhalb des Gehäuses 21 angeordnet. Das erste Fördermittel 17 kann somit insbesondere dazu ausgebildet sein, Produkte quer zu der Längsrichtung L der Presskammer 13 und/oder entlang einer Förderrichtung F in das Gehäuse 21 der Presseinrichtung 11 zu fördern.

In dem Einbringabschnitt 19 ist ein zweites Fördermittel 63 angeordnet, welches dazu ausgebildet ist, in dem Einbringabschnitt 19 angeordnete Produkte weiter quer zu der Längsrichtung L der Presskammer 13 zu fördern. Insbesondere ist das zweite Fördermittel 63 als eine Bandkassette 67 ausgebildet und umfasst ebenfalls ein Förderband, so dass das zweite Fördermittel 63 als kompaktes Modul in Form der Bandkassette 67 in das Gehäuse 21 der Presseinrichtung 11 eingesetzt werden kann.

Das zweite Fördermittel 63 ist darüber hinaus dazu ausgebildet, ein in den Einbringabschnitt 19 gefördertes Produkt quer zu der Längsrichtung L gegen einen Anschlag 75 zu fördern. Dies kann es ermöglichen, das Produkt in dem Einbringabschnitt 19 präzise auszurichten, um ein nachfolgendes Einbringen in die Presskammer 13 zu ermöglichen.

Zusätzlich zu dem ersten Fördermittel 17 und dem zweiten Fördermittel 63 umfasst die Einbringeinrichtung 15 zudem ein drittes Fördermittel 77, welches dazu ausgebildet ist, ein Produkt aus dem Einbringabschnitt 19 entlang der Längsrichtung L in die Presskammer 13 zu fördern. Bei der gezeigten Ausführungsform ist das dritte Fördermittel 77 als ein Produktschieber 79 ausgebildet, welcher eine Schiebefläche aufweist und in einer Führung linear entlang der Längsrichtung L verschiebbar ist. Dadurch kann der Produktschieber 79 an einem der Presskammer 13 abgewandten Ende eines Produktes angreifen, um dieses in die Presskammer 13 zu schieben. Ferner ist, um ein solches Einschieben eines Produkts entlang der Längsrichtung L in die Presskammer 13 zu ermöglichen, der Einbringabschnitt 19 bezüglich der Längsrichtung L in Flucht zu der Presskammer 13 ausgerichtet. Beispielsweise kann das dritte Fördermittel 77 mittels eines Spindeltriebs entlang der Längsrichtung L verfahrbar sein und/oder durch einen Elektromotor, insbesondere einen Servomotor, antreibbar sein. Darüber hinaus geht aus Fig. 1B hervor, dass das dritte Fördermittel 77 dazu ausgebildet ist, ein Produkt über das erste Pressmittel 81 hinweg in die Presskammer 13 zu fördern. Um auch ein nachfolgend in den Einbringabschnitt 19 eingebrachtes Produkt in die Presskammer 13 fördern zu können, kann das dritte Fördermittel 77 zudem auch entgegen der Längsrichtung L verfahrbar sein.

Mittels der Einbringeinrichtung 15 können Produkte somit auf komfortable Weise in die Presskammer 13 eingebracht werden, ohne dass ein manueller Eingriff in die Presskammer 13 und/oder ein manuelles Beladen der Presseinrichtung 11 erforderlich ist. Vielmehr können Produkte komfortabel in die Kammern 27 des ersten Fördermittels 17 eingelegt werden und daraufhin automatisch mittels der Einbringeinrichtung 15 nacheinander in die Presskammer 13 geführt werden. Indem das erste Fördermittel 17 ferner mehrere Kammern 27 aufweist, kann das erste Fördermittel 17 auch als ein Speicher oder Puffer für mehrere Produkte wirken, so dass etwaige Verzögerungen aufgrund einer lediglich langsamen manuellen Beladung der Presskammer 13 vermieden werden können.

Jedoch geht aus den Fig. 1A und 1B auch hervor, dass das Fördermittel 17 in einer Einbringstellung A, in welcher Produkte mittels des ersten Fördermittels 17 zu dem Einbringabschnitt 19 förderbar sind und der Einbringabschnitt 19 in Förderrichtung F an das erste Fördermittel 17 anschließt, quer von dem Gehäuse 21 absteht und dadurch beispielsweise einen Zugang zu dem Einbringabschnitt 19, etwa zu Reinigungs- oder Wartungszwecken, erschwert. Darüber hinaus ragt das erste Fördermittel 17 in dieser Einbringstellung A in einem von dem Ausgang 92 der Presskammer 13 zu einem entgegengesetzten Ende der Presseinrichtung 11 führenden Weg hinein, so dass das erste Fördermittel 17 auch einen Durchgang in dieser Richtung beeinträchtigen kann.

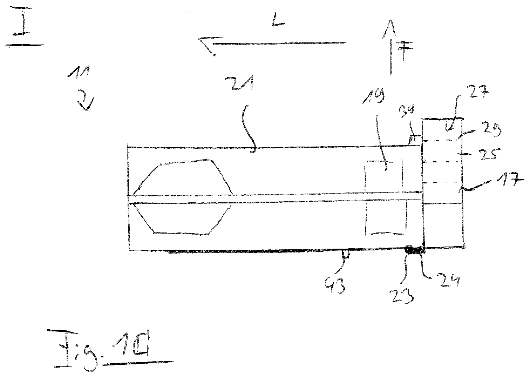

Um unter anderem diesem Problem zu begegnen und dennoch ein komfortables und automatisches Einbringen von Produkten in die Presskammer 13 zu ermöglichen, ist das erste Fördermittel 17 zwischen der in den Fig. 1A und 1B gezeigten Einbringstellung A, in welche sich der Einbringabschnitt 19 an das erste Fördermittel 17 anschließt, und einer in Fig. 1C veranschaulichten Inaktivitätsstellung I bewegbar. In der Inaktivitätsstellung I ist das erste Fördermittel 17 bezüglich der Längsrichtung L hinter dem Gehäuse 21 der Presseinrichtung 11 angeordnet, so dass sich die Presskammer 13, der Einbringabschnitt 19 und das erste Fördermittel 17 bezüglich der Längsrichtung L hintereinander befinden. In dieser Inaktivitätsstellung I steht das erste Fördermittel 17 somit nicht von dem Gehäuse 21 ab, sondern gibt einen Durchgang sowie einen Zugang zu dem Einbringabschnitt 19 frei.

Insbesondere kann das erste Fördermittel 17 bei der gezeigten Ausführungsform von der Einbringstellung A in die Inaktivitätsstellung I - und umgekehrt - verschwenkt werden. Dies ermöglicht einen komfortablen und schnellen Wechsel zwischen der Einbringstellung A und der Inaktivitätsstellung I. Wie Fig. 1C veranschaulicht, ist das erste Fördermittel 17 jedoch auch in der Inaktivitätsstellung I mit dem Gehäuse 21 verbunden und daran abgestützt. Das erste Fördermittel 17 muss somit nicht von dem Gehäuse 21 getrennt werden, um einen Zugang zu dem Einbringabschnitt 19 oder ein ungestörtes Vorbeigehen an der Presseinrichtung 11 zu ermöglichen.

Insbesondere ist das erste Fördermittel 17 um eine Schwenkachse S verschwenkbar, welche durch zwei an dem Gehäuse befestigte, vertikal übereinander mit Abstand angeordnete Stifte 23 gebildet ist. Das erste Fördermittel 17 ist mit den Stiften 23 über jeweilige Schwenkarme 24 verbunden, um den Abstand zwischen den Stiften 23 und dem Ende der Presseinrichtung bei einem Schwenken des ersten Fördermittels von der Einbringstellung A in die Inaktivitätsstellung I überbrücken und das erste Fördermittel 17 in der Inaktivitätsstellung I hinter dem Gehäuse 21 anordnen zu können.

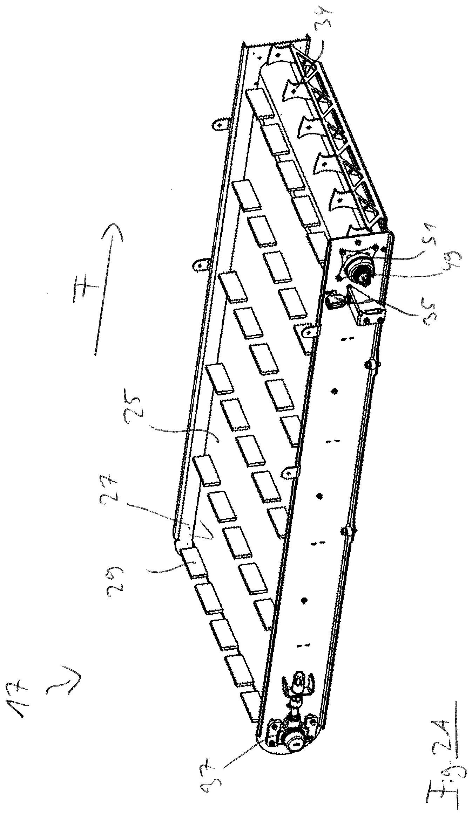

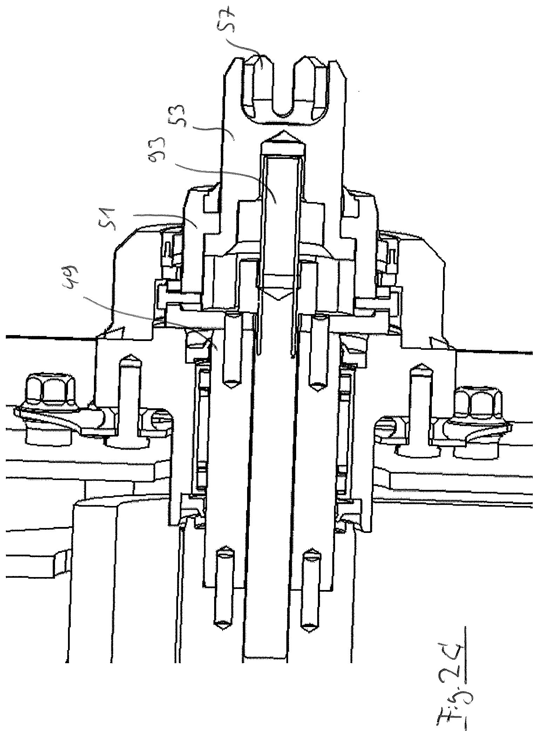

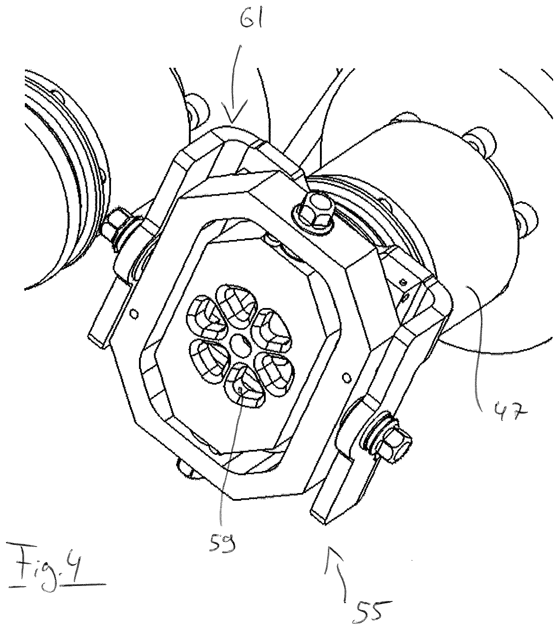

Darüber hinaus wird aus den Fig. 1A bis 1C ersichtlich, dass das erste Fördermittel 17 keinerlei Versorgungsleitungen wie z.B. elektrische Kabel und auch keinen bezüglich des Gehäuses 12 extern angeordneten Antrieb aufweist, um ein Bewegen von Produkten zu ermöglichen. Vielmehr ist das erste Fördermittel 17 dazu ausgebildet, mittels eines hinter einem Gehäuseverschluss 97 angeordneten Antriebs 45 angetrieben zu werden, wie nachstehend anhand der Fig. 2A bis 4 erläutert ist.

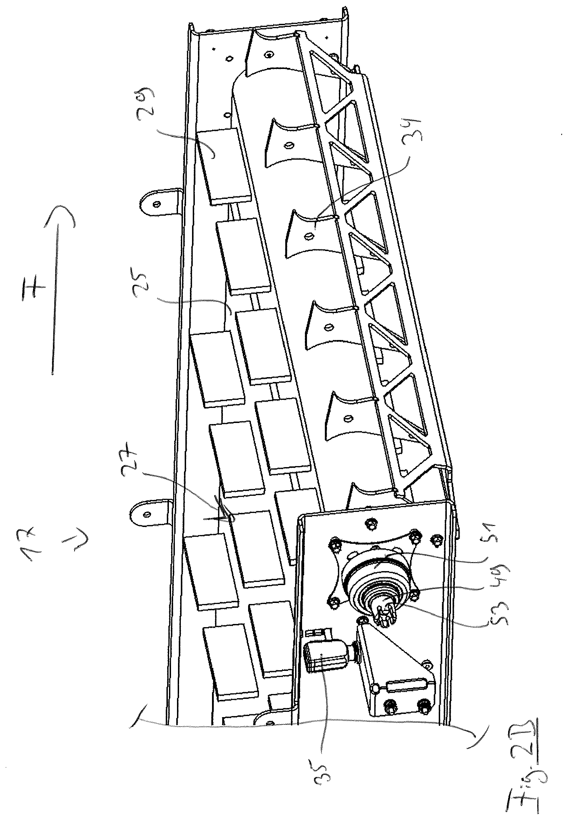

Fig. 2A zeigt eine Ansicht des ersten Fördermittels 17 und Fig. 2B eine Detailansicht eines dem Einbringabschnitt 19 in der Einbringstellung A zugewandten Endes des ersten Fördermittels 17. Das erste Fördermittel 17 weist beispielsweise eine Spanneinrichtung 37 auf, um das Förderband 22 spannen zu können. Darüber hinaus ist an dem dem Einbringabschnitt 19 zugewandten Ende ein Sensor 35 angeordnet, welcher dazu ausgebildet ist, ein Produkt in einem Übergabeabschnitt zwischen dem ersten Fördermittel 17 und dem Einbringabschnitt 19 zu erfassen. Insbesondere kann der Sensor 35 dazu ausgebildet sein, ein hinteres Produktende zu erfassen und ein entsprechendes Signal an eine Steuereinrichtung 41 der Presseinrichtung zu übermitteln (vgl. Fig. 1A und 1B), wobei die Steuereinrichtung 41 beispielsweise dazu ausgebildet sein kann, das erste Fördermittel 17 zu stoppen. Dadurch kann verhindert werden, dass mehrere Produkte gleichzeitig zu dem Einbringabschnitt 19 gefördert werden. Hingegen kann die Steuereinrichtung 41 dazu ausgebildet sein, in Ansprechen auf ein Signal des Sensors 35 das zweite Fördermittel 63 anzutreiben, um ein Bewegen des Produkts in dem Einbringabschnitt 19 gegen den Anschlag 75 zu ermöglichen.

Darüber hinaus zeigen die Fig. 2A und 2B, dass an dem Gehäuse 21 ein Kamm 34 angeordnet ist, über welchen die Produkte in den Einbringabschnitt 19 gefördert werden können. Die unterbrochenen Stege 29 können jedoch zwischen dem Kamm 34 abtauchen, wenn das Förderband 25 weiterbewegt wird. Zudem können die Stege 29 als eine Auflagefläche für die Produkte während des Überführens zu dem Einbringabschnitt 19 dienen.

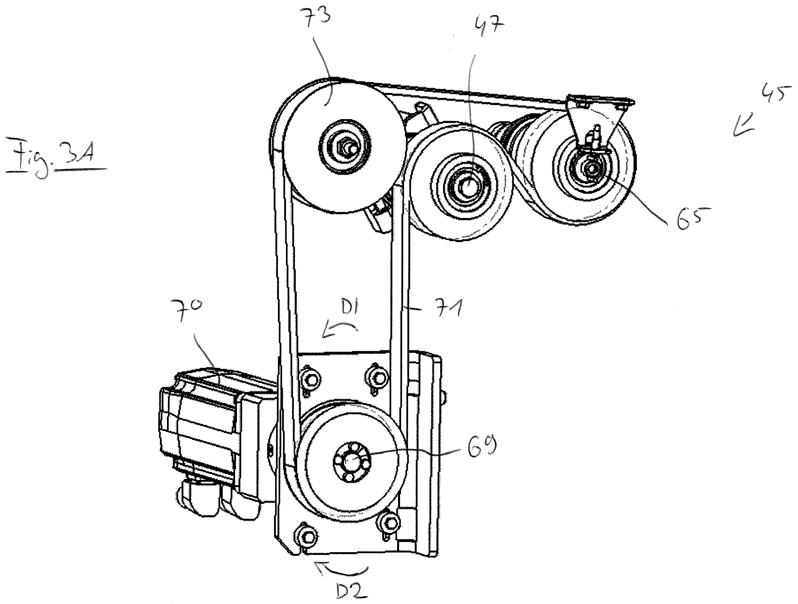

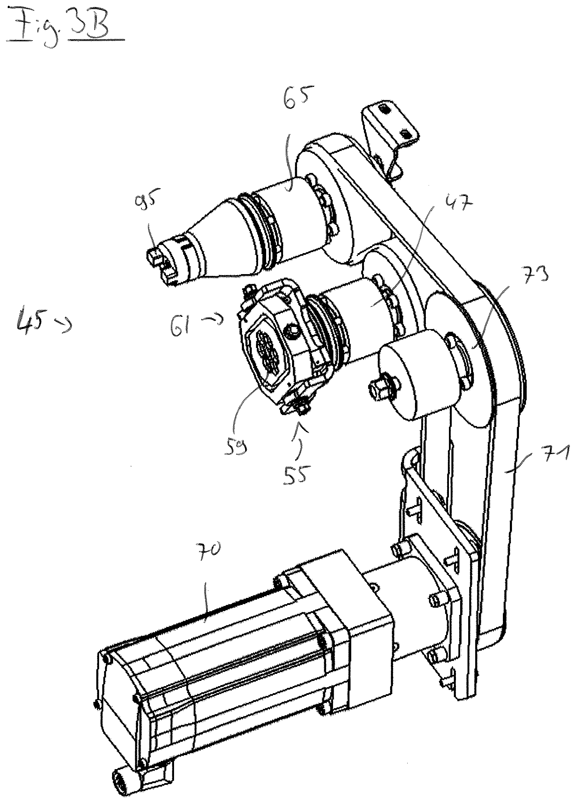

Die Fig. 3A und 3B zeigen den bereits erwähnten Antrieb 45 für das erste Fördermittel 17, welcher in dem Gehäuse 21 und nicht extern bzw. unmittelbar an dem ersten Fördermittel 17 angeordnet ist. Der Antrieb 45 umfasst einen Motor 70, insbesondere einen Elektromotor und/oder Servomotor, welcher dazu ausgebildet ist, eine Motorwelle 69 in eine Drehung entlang einer ersten Drehrichtung D1 sowie entlang einer zweiten Drehrichtung D2 zu versetzen. Die erste Drehrichtung D1 und die zweite Drehrichtung D2 sind einander dabei entgegengesetzt. Über einen Riemen ist die Motorwelle 69 ferner mit einer Abtriebswelle 47 sowie mit einer weiteren Abtriebswelle 65 verbunden. Der Riemen läuft zudem um eine Umlenkung 73.

Durch die Verbindung der Abtriebswelle 47 und der zweiten Abtriebswelle 65 mit der Motorwelle 69 über den Riemen 63 kann erreicht werden, dass die Abtriebswelle 47 und die zweite Abtriebswelle 65 stets entgegengesetzt zueinander rotieren. So dreht die Abtriebswelle 47 stets entlang derselben Drehrichtung D1 oder D2 wie die Motorwelle 69, während die zweite Abtriebswelle 65 stets entgegengesetzt dreht.

Wie Fig. 3B zeigt, ist an der Abtriebswelle 47 ein Kuppelelement 55 angeordnet. Das Kuppelelement 55 ist insbesondere über eine kardanische Halterung 61 mit der Abtriebswelle 47 verbunden und weist mehrere axiale Kupplungsvertiefungen auf.

Wie wiederum die Fig. 2A bis 2C zeigen, ist an der Antriebswelle 49 des ersten Fördermittel 17 ein erstes Kupplungselement 53 angeordnet, welches mehrere axiale Kupplungsfortsätze aufweist. Das erste Kupplungselement 53 ist dabei dazu ausgebildet, infolge einer Bewegung des ersten Fördermittels 17 in die Einbringstellung an dem zweiten Kupplungselement 55 der Abtriebswelle 47 einzukuppeln. Folglich kann die Antriebswelle 49 des ersten Fördermittels 17 infolge einer Bewegung in die Einbringstellung automatisch in eine drehfeste Kopplung mit der Abtriebswelle 47 gelangen, um mittels des Antriebs 45 angetrieben werden zu können.

Indem das zweite Kupplungselement 55 kardanisch an der Abtriebswelle 47 gehalten ist, kann insbesondere ein Toleranzausgleich erreicht werden, indem das zweite Kupplungselement 55 gegenüber der Abtriebswelle 47 ausgelenkt werden kann. Darüber hinaus ist auch das erste Kupplungselement 53 an der Antriebswelle 49 des ersten Fördermittels 17 auslenkbar, indem dieses axial mittels einer Feder 93 vorgespannt ist.

Wie Fig. 3B ferner zeigt, ist an der zweiten Abtriebswelle 65 eine Steckkupplung 95 ausgebildet. Diese ist dazu vorgesehen, die zweite Abtriebswelle 65 in drehfeste Kopplung mit einer zweiten Antriebswelle 66 zu bringen, mittels derer das zweite Fördermittel 63 antreibbar ist. Folglich ist der Antrieb 45 dazu ausgebildet, sowohl das erste Fördermittel 17 als auch das zweite Fördermittel 45 anzutreiben.

Darüber hinaus drehen die Abtriebswelle 47 und die weitere Abtriebswelle 65 aufgrund des Führungsriemens 71 stets in entgegengesetzte Drehrichtungen D1 oder D2. Das erste Fördermittel 17 weist ferner gegenüber einer Drehung der Motorwelle 69 entlang der zweiten Drehrichtung D2 einen Freilauf auf, so dass das zweite Fördermittel 17 bzw. das Förderband 25 bei einer Drehung der Motorwelle entlang der zweiten Drehrichtung D2 steht. Das zweite Fördermittel 63 weist hingegen gegenüber einer Drehung der Motorwelle 69 entlang der ersten Drehrichtung D1 einen Freilauf auf. Das erste Fördermittel 17 kann durch eine Drehung der Motorwelle entlang der ersten Drehrichtung D1 und das zweite Fördermittel 63 durch eine Drehung der Motorwelle entlang der zweiten Drehrichtung D1 angetrieben werden.

Dies kann es ermöglichen, mittels des gemeinsamen Antriebs 45 Produkte gezielt in den Einbringabschnitt 19 und gegen den Anschlag 75 zu fördern, indem die Motorwelle 69 zunächst entlang der ersten Drehrichtung D1 angetrieben und das Produkt mittels des ersten Fördermittels 17 zu dem Einbringabschnitt 19 gefördert wird. Sobald das Produkt jedoch den Einbringabschnitt 19 erreicht, kann die Motorwelle 69 in der zweiten Drehrichtung D2 angetrieben werden, so dass das Produkt mittels des zweiten Fördermittels 63 gegen den Anschlag 75 gefördert werden kann, jedoch kein weiteres Produkt in den Einbringabschnitt 19 gefördert wird. Sobald das Produkt mittels des dritten Fördermittels 77 in die Presskammer 13 gefördert wurde und das dritte Fördermittel 77 wieder entgegen der Längsrichtung L zurückbewegt wurde, kann die Motorwelle 69 wiederum entlang der ersten Drehrichtung D1 angetrieben werden, um ein nachfolgendes Produkt mittels des ersten Fördermittels 17 zu dem Einbringabschnitt 19 zu fördern.

Ferner zeigen die Fig. 1A und 1B, dass an dem Gehäuse 12 eine Verriegelung 39 für das erste Fördermittel 17 in der Einbringstellung A vorgesehen ist. Auch in der Inaktivitätsstellung I ist eine solche Verriegelung 39 vorgesehen, wie Fig. 1C zeigt. Insbesondere kann dadurch das erste Fördermittel 17 gegen ungewollte Bewegungen gesichert werden.

Ferner umfasst die Presseinrichtung 11 eine Erfassungseinrichtung 43, welche dazu ausgebildet ist, das erste Fördermittel 17 in der Einbringstellung A zu erfassen. Insbesondere kann die Erfassungseinrichtung 43 dazu ausgebildet sein, an die Steuereinrichtung 41 zu melden, wenn sich das erste Fördermittel 17 in der Einbringstellung A befindet. Die Steuereinrichtung 41 kann beispielsweise dazu ausgebildet sein, das Fördermittel 17 lediglich dann mittels des Antriebs 45 anzutreiben, wenn die Erfassungseinrichtung 43 meldet, dass sich das erste Fördermittel 17 korrekt in der Einbringstellung A befindet. Hierzu kann die Erfassungseinrichtung 43 beispielsweise einen Kontaktsensor umfassen.

### Bezugszeichenliste

- 11: Presseinrichtung
- 13: Presskammer
- 15: Einbringeinrichtung
- 17: erstes Fördermittel
- 19: Einbringabschnitt
- 20: Gehäuseabschnitt
- 21: Gehäuse
- 23: Stift
- 24: Schwenkarm
- 25: Förderband
- 27: Kammer
- 29: Steg
- 31: Stützstrebe
- 33: Übergabeabschnitt
- 34: Kamm
- 35: Sensor
- 37: Spanneinrichtung
- 39: Verriegelung
- 41: Steuereinrichtung
- 43: Erfassungseinrichtung
- 45: Antrieb
- 47: Abtriebswelle
- 49: Antriebswelle
- 51: Umlenkrolle
- 53: erstes Kuppelelement
- 55: zweites Kuppelelement
- 57: Kuppelfortsatz
- 59: Kuppelvertiefung
- 61: kardanische Halterung
- 63: zweites Fördermittel
- 65: zweite Abtriebswelle
- 66: zweite Antriebswelle
- 67: Bandkassette
- 69: Motorwelle
- 70: Motor
- 71: Riemen
- 73: Umlenkung
- 75: Anschlag
- 77: drittes Fördermittel
- 79: Produktschieber
- 81: erstes Pressmittel
- 83: zweites Pressmittel
- 85: drittes Pressmittel
- 87: erstes Gegenelement
- 89: zweites Gegenelement
- 91: drittes Gegenelement
- 92: Ausgang
- 93: Feder
- 95: Steckkupplung
- 97: Gehäuseverschluss
- A: Einbringstellung
- D1: erste Drehrichtung
- D2: zweite Drehrichtung
- F: Förderrichtung
- I: Inaktivitätsstellung
- L: Längsrichtung
- S: Schwenkachse

## Patentansprüche

1. Presseinrichtung (11) zum Pressen von Fleischprodukten, insbesondere gefrorenen und/oder angefrorenen Fleischprodukten, bevorzugt Frischfleischprodukten und/oder Bacon,
mit einer sich entlang einer Längsrichtung (L) erstreckenden Presskammer (13), in welche ein zu pressendes Produkt mittels einer Einbringeinrichtung (15) einbringbar ist,
wobei die Einbringeinrichtung (15) ein erstes Fördermittel (17) umfasst, welches dazu ausgebildet ist, das Produkt quer zu der Längsrichtung (L) der Presskammer (13) zu einem Einbringabschnitt (19) zu fördern,
wobei das erste Fördermittel (17) an einem Gehäuse (21) der Presseinrichtung (11) abgestützt ist, und wobei das erste Fördermittel (17) relativ zu dem Gehäuse (21) zwischen einer Einbringstellung (A), in welcher sich der Einbringabschnitt (19) an das erste Fördermittel (17) anschließt, und einer Inaktivitätsstellung (I), in welcher sich der Einbringabschnitt (19) nicht an das erste Fördermittel (17) anschließt, bewegbar ist.

2. Presseinrichtung (11) nach Anspruch 1,
wobei der Einbringabschnitt (19) bezüglich der Längsrichtung (L) in Flucht zu der Presskammer (13) oder in der Presskammer (13) angeordnet ist, insbesondere wobei der Einbringabschnitt (19) in dem Gehäuse (21) angeordnet ist.

3. Presseinrichtung (11) nach Anspruch 1 oder 2,
wobei das erste Fördermittel (17) in der Einbringstellung (A) quer zu der Längsrichtung (L) von dem Gehäuse (21) absteht und/oder wobei das erste Fördermittel (17) in der Inaktivitätsstellung (I) in Längsrichtung (L) hinter dem Gehäuse (21) angeordnet ist; und/oder
wobei das erste Fördermittel (17) zwischen der Einbringstellung (A) und der Inaktivitätsstellung (I), insbesondere um eine vertikale Schwenkachse (S), verschwenkbar ist.

4. Presseinrichtung (11) nach einem der vorhergehenden Ansprüche,
wobei das erste Fördermittel (17) ein endlos umlaufendes Förderband (25) umfasst; und/oder wobei das erste Fördermittel (17) mehrere Kammern (27) aufweist, wobei in jede der Kammern (27) zumindest ein Produkt einlegbar ist,
wobei die Kammern (27) insbesondere durch quer zu einer Förderrichtung (F), entlang welcher das Produkt mittels des ersten Fördermittels (17) förderbar ist, verlaufende Stege (29) voneinander abgegrenzt sind.

5. Presseinrichtung (11) nach einem der vorhergehenden Ansprüche,
wobei das erste Fördermittel (17) in der Einbringstellung (A) an dem Gehäuse (21) über eine Stützstrebe (31) abgestützt ist, insbesondere wobei das erste Fördermittel (17) in der Einbringstellung (A) lediglich über das Gehäuse (21) am Boden abgestützt ist.

6. Presseinrichtung (11) nach einem der vorhergehenden Ansprüche,
wobei das erste Fördermittel (17) an einem dem Einbringabschnitt (19) zugewandten Übergabeabschnitt (33) einen Sensor (35) zum Erfassen des Produkts aufweist; und/oder
wobei die Presseinrichtung (11) eine Erfassungseinrichtung (43) aufweist, welche dazu ausgebildet ist, das erste Fördermittel (17) in der Einbringstellung (A) zu erfassen; und/oder
wobei das erste Fördermittel (17) in der Einbringstellung (A) verriegelbar ist, insbesondere wobei das erste Fördermittel (17) infolge einer Bewegung in die Einbringstellung (A) automatisch verriegelbar ist.

7. Presseinrichtung (11) nach einem der vorhergehenden Ansprüche,
wobei in dem Gehäuse (21) ein Antrieb (45) zum Antreiben des ersten Fördermittels (17) angeordnet ist, wobei das erste Fördermittel (17) dazu ausgebildet ist, infolge einer Bewegung von der Inaktivitätsstellung (I) in die Einbringstellung (A) an den Antrieb (45) anzukuppeln.

8. Presseinrichtung (11) nach Anspruch 7,
wobei das erste Fördermittel (17) dazu ausgebildet ist, infolge einer Bewegung von der Inaktivitätsstellung (I) in die Einbringstellung (A) an eine an dem Gehäuse (21) abgestützte und von dem Antrieb (45) antreibbare Abtriebswelle (47) anzukuppeln.

9. Presseinrichtung (11) nach Anspruch 8,
wobei das erste Fördermittel (17) eine Antriebswelle (49) aufweist, insbesondere eine mit einer Umlenkrolle (51) eines Förderbandes (25) verbundene oder die Umlenkrolle (51) bildende Antriebswelle (49), wobei die Antriebswelle (49) dazu ausgebildet ist, infolge der Bewegung des ersten Fördermittels (17) von der Inaktivitätsstellung (I) in die Einbringstellung (A) in eine drehfeste Verbindung mit der Abtriebswelle (47) zu gelangen,
insbesondere wobei die Antriebswelle (49) und die Abtriebswelle (47) in der Einbringstellung (A) des ersten Fördermittels (17) koaxial zueinander angeordnet sind.

10. Presseinrichtung (11) nach Anspruch 9,
wobei an der Antriebswelle (49) ein erstes Kuppelelement (53) angeordnet ist und wobei an der Abtriebswelle (47) ein zweites Kuppelelement (55) angeordnet ist, wobei das erste Kuppelelement (53) dazu ausgebildet ist, infolge der Bewegung des ersten Fördermittels (17) von der Inaktivitätsstellung (I) in die Einbringstellung (A) in Eingriff zu dem zweiten Kuppelelement (55) zu gelangen,
insbesondere wobei das erste Kuppelelement (53) zumindest zwei axiale Kuppelfortsätze (57) aufweist, welche in der Einbringstellung (A) in zugeordnete axiale Kuppelvertiefungen (59) des zweiten Kuppelelements (55) eingreifen, oder umgekehrt; und/oder
insbesondere wobei das zweite Kuppelelement (55) auslenkbar an der Abtriebswelle (47) angeordnet ist; und/oder
insbesondere wobei das zweite Kuppelelement (55) kardanisch an der Abtriebswelle (47) gehalten ist.

11. Presseinrichtung (11) nach einem der Ansprüche 7 bis 9,
wobei in dem Einbringabschnitt (19) ein zweites Fördermittel (63) angeordnet ist, welches dazu ausgebildet ist, das Produkt in dem Einbringabschnitt (19) quer zu der Längsrichtung (L) zu fördern, wobei das zweite Fördermittel (63) mittels des Antriebs (45) antreibbar ist,
insbesondere wobei das zweite Fördermittel (63) dazu ausgebildet ist, das Produkt in dem Einbringabschnitt (19) gegen einen Anschlag (75) zu fördern.

12. Presseinrichtung (11) nach Anspruch 11,
wobei das erste Fördermittel (17) in der Einbringstellung (A) durch eine Drehung einer Motorwelle (69) in einer ersten Drehrichtung (D1) antreibbar ist und gegenüber einer Drehung der Motorwelle (69) in einer der ersten Drehrichtung (D1) entgegengesetzten zweiten Drehrichtung (D2) einen Freilauf aufweist, wobei das zweite Fördermittel (63) durch eine Drehung der Motorwelle (69) in der zweiten Drehrichtung (D2) antreibbar ist und gegenüber einer Drehung der Motorwelle (69) in der ersten Drehrichtung (D1) einen Freilauf aufweist.

13. Presseinrichtung (11) nach Anspruch 11 oder 12,
wobei das zweite Fördermittel (63) durch eine von dem Antrieb (45) angetriebene zweite Abtriebswelle (65) antreibbar ist,
insbesondere wobei der Antrieb (45) dazu ausgebildet ist, die Abtriebswelle (47) und die zweite Abtriebswelle (65) in entgegengesetzte Drehungen zu versetzen.

14. Presseinrichtung (11) nach Anspruch 13,
wobei der Antrieb (45) dazu ausgebildet ist, die Abtriebswelle (47) und die zweite Abtriebswelle (65) über einen Riemen (71) anzutreiben,
insbesondere wobei der Riemen (71) ferner über eine Umlenkung (73), insbesondere Umlenkrolle, geführt ist.

15. Presseinrichtung (11) nach einem der vorhergehenden Ansprüche,
wobei die Einbringeinrichtung (15) ein drittes Fördermittel (77) aufweist, welches dazu ausgebildet ist, das Produkt aus dem Einbringabschnitt (19) entlang der Längsrichtung (L) in die Presskammer (13) zu fördern,
insbesondere wobei das dritte Fördermittel (77) als ein Produktschieber (79) ausgebildet ist; und/oder
insbesondere wobei die Presskammer (13) ein in Längsrichtung (L) verfahrbares Pressmittel (81) aufweist, welches zum Komprimieren des Produkts in der Presskammer (13) in Richtung eines Gegenelements (87) verfahrbar ist, wobei das dritte Fördermittel (77) dazu ausgebildet ist, das Produkt über das Pressmittel (81) in die Presskammer (13) zu fördern.
